# EUROPÄISCHE PATENTSCHRIFT

(11) **EP 1 122 151 B1**
(45) Veröffentlichungstag und Bekanntmachung des Hinweises auf die Patenterteilung: **07.04.2004**
(21) Anmeldenummer: 01102496.5
(22) Anmeldetag: 05.02.2001
(51) Int. Cl.: B62D 21/14, B62D 53/06

(54) **Fahrzeug mit ausziehbarer tiefliegender Ladefläche**
Vehicle with low-level extensible loading platform
Véhicule à plateau de chargement surbaissé extensible

(30) Priorität: 07.02.2000 DE 20002122 U; 09.03.2000 DE 20004167 U
(43) Veröffentlichungstag der Anmeldung: 08.08.2001
(73) Patentinhaber: Botzenhart, Alfred, 87781 Ungerhausen (DE)
(72) Erfinder: Botzenhart, Alfred, 87781 Ungerhausen (DE)
(74) Vertreter: Pfister, Helmut, Dipl.-Ing.

(56) Entgegenhaltungen:
- DE-B- 1 090 977
- DE-B- 2 618 465
- FR-A- 2 646 646
- FR-A- 2 679 510
- GB-A- 2 194 761
- US-A- 3 698 734
- US-A- 5 042 831

## Beschreibung

Die Erfindung betrifft ein Fahrzeug mit einem verlängerbarem Tiefbett zum Transport einer schweren Sattellast mit einem vorderen Trägerverband, der mit einer vorderen Lastaufnahme verbunden ist, einer Lastfläche, einem hinteren Trägerverband und zumindest einem Fahrwerk, das unterhalb, vor oder hinter der Lastfläche angeordnet und von gegenüberliegenden Rädern gebildet ist, wobei der vordere Trägerverband über eine Teleskopverbindung mit dem hinteren Trägerverband verbunden ist und die Teleskopverbindung ein Verschieben des vorderen Trägerverbands relativ zum hinteren Trägerverband in Längsrichtung ermöglicht und von einer in eine hülsenartige Aufnahme eingeschobenen und in dieser verschieb- und festlegbar gelagerten Schubstange gebildet ist.

Die Schubstange ist in einem eingeschobenen Zustand des Fahrzeuges mit einem ihrer Enden zwischen und/oder neben den Rädern des Fahrwerks angeordnet.

Derartige Fahrzeuge sind allgemein bekannt (siehe Tiefladesattelanhänger gemäß DE 2618465) und werden als Spezialfahrzeuge zum Transport schwerer Nutzlasten eingesetzt.

Im Stand der Technik ist die US-Patentschrift 4.362.317 bekannt. Dieses Dokument betrifft einen Tieflader, bei welchem der Auflieger in seiner Länge variierbar ist. Hierzu weist der Auflieger eine entsprechende teleskopierbare Rahmenkonstruktion auf. Die Nutzlänge dieses Fahrzeuges ist aber begrenzt, da der Bereich des nachlaufenden Trägerverbandes höher ist als das Niveau des Tiefbettes.

Aus dem deutschen Gebrauchsmuster 70 08 365 ist ein Fahrgestell für Einachsanhänger bekannt, bei welchem vorgeschlagen wird, daß das Fahrgestell in einen einheitlichen Achskörper und eine Zugdeichsel aufgeteilt ist. Für einen einfachen Aufbau und die Realisierung von verschiedenen Größen wird vorgeschlagen, an der Achse ein U-förmiges Profil anzuordnen, welches entsprechend dem gewünschten Maß des Anhängers mit einem dort korrespondierenden Rohr der Deichsel in der gewünschten Position fest verbunden wird.

Aus dem französischen Patent 1 091 922 ist ein verstellbares Fahrgestell bekannt, bei welchem die Achsen Öffnungen aufweisen, durch die ein Verbindungselement durchgesteckt werden kann, welches die zwei Achsen zu einem Fahrzeug verbindet. Der Abstand der Achsen ist auf dem Verbindungselement einstellbar, da die Achsen einfache Klemmverbindungen aufweisen. Ein solches Fahrgestell ist zum Beispiel als Nachschleppgerät zum Transportieren von Langhölzern und so weiter einsetzbar. Nachteilig bei einer solchen Ausgestaltung ist, daß das Verbindungselement eine konstante Länge aufweist und somit die Länge des Fahrzeuges, unabhängig von dem Achsabstand, festlegt. Dies bedeutet, daß selbst bei zusammengeschobenen Achsen das Fahrzeug die Länge des Verbindungselementes behält.

Diese Fahrzeuge sind meist für den Transport nicht nur schwerer Lasten, sondern auch sperriger Gegenstände ausgelegt, die eine Länge der Lastfläche erfordern, die über das übliche Maß straßenüblicher Lastwagen deutlich hinausgehen können. Um nicht auch für Leerfahrten oder Fahrten mit nur kurzer Last üblicher Länge ein übergroßes Fahrzeug durch enge Straße steuern zu müssen, können die bekannten Fahrzeuge in der Länge variiert werden, um die Lastfläche an die Größe der zu transportierenden Nutzlast anpassen zu können.

Hierzu weisen die Fahrzeuge einen vorderen Trägerverband und einen hinteren Trägerverband auf, zwischen denen im allgemeinen die Lastfläche in Form einer ebenen Ladefläche angeordnet ist, auf der Spezialfahrzeuge wie Bagger, Planierraupen oder sonstige Kettenfahrzeuge oder auch sperrige Industriegüter abgestellt werden können. Die beiden Trägerverbände sind über eine oder möglicherweise auch mehrere Teleskopverbindungen miteinander verbunden, die ein verschieben beider Verbände relativ zueinander ermöglichen. Dies kann einerseits geschehen, um die zur Verfügung stehende Lastfläche zu vergrößern, wobei entweder hierdurch nur der lichte Raum zwischen dem sogenannten Vorlauffahrwerk und dem sogenannten Nachlauffahrwerk vergrößert wird, um beispielsweise ein Fahrzeug mit ausladendem Aufbau aufnehmen zu können oder auch eine zusätzliche oder größere Lastfläche aufgebaut werden kann. Letzteres kann beispielsweise durch Anlegen von einzelnen Verlängerungsplatten geschehen.

Ein anderer Grund für das Zusammenschieben der Trägerverbände kann in der Notwendigkeit liegen, bei Leerfahrten das Fahrzeug auf eine möglichst geringe Länge zu verkürzen. Dies kann dadurch geschehen, dass die Lastfläche zum Beispiel angehoben und das Nachlauffahrwerk oder auch beide Fahrwerke unter die Lastfläche geschoben werden.

Um die Verkürzung zu ermöglichen, ist bei den bekannten Fahrzeugen unter der Lastfläche eine Paarung aus der hülsenartigen Aufnahme und einer darin eingesteckten Schubstange vorgesehen. Die Schubstange kann in verschiedenen Positionen innerhalb der Aufnahme festgelegt werden, so dass eine sichere Übertragung der Zugkraft auch auf den hinteren Trägerverband möglich ist. Die Zugstange muss jedoch noch ein hinreichend großes Stück in der Aufnahme verbleiben, so dass die Abstützung der Lastfläche die hohen Biegemomente infolge der hohen Nutzlast noch aufzunehmen vermag. Übliche Gewichte für die Nutzlast sind dabei beispielsweise 50 t und mehr.

Fahrzeuge dieser Art weisen beispielsweise eine Gesamtlänge von 16m bis 30m und eine Lastfläche, die zwischen 5m und 20m je nach Fahrzeugtyp variierbar ist, auf. Die Einspannung der Schubstange in der Aufnahme darf dabei etwa 2m nicht unterschreiten, da ansonsten eine Knickgefahr im Übergangsbereich entstehen würde. Der Nachteil der bekannten Fahrzeuge ist, dass sie, obwohl eine Variation der Gesamtlänge grundsätzlich möglich ist, in ihrer Flexibilität eingeschränkt sind, da die zur Verfügung stehende Verlängerungsmöglichkeit häufig nicht ausreicht.

Schließlich besteht ein weiterer Nachteil der bekannten Fahrzeuge darin, dass zum Aufbau einer mechanisch zuverlässigen Teleskopverbindung zwischen dem vorderen und hinteren Trägerverband eine schwere und materialintensive Konstruktion erforderlich ist, da insbesondere bei Aufliegern bei den herkömmlichen Fahrzeugen die Kraft ungünstig von der Schubstange auf die vordere Lastaufnahme, beispielsweise den Auflagepunkt der Zugmaschine eines Sattelzuges, übertragen wird. So wird die vordere Lastaufnahme bei den bekannten Sattelaufliegern mit einem vorderen Vorlauffahrwerk neben der eigentlichen Nutzlast zusätzlich mit der Last der Eigenkonstruktion belastet, was im Rahmen der Festigkeitsberechnung zu berücksichtigen ist.

Darüber hinaus wird bei den Fahrzeugen auch gewünscht, daß nicht nur verhältnismäßig lange Güter transportiert werden können, sondern daß auch verhältnismäßig große, sperrige Güter, zum Beispiel bis zu 4,0 m Durchmesser oder mehr, transportiert werden können. Eine Anordnung der teleskopierbaren Schubstange überhalb des Trägerverbandes verbietet sich daher, da dadurch die nutzbare Höhe der zu transportierenden Güter um die Höhe des Fahrwerke ca. 1,0 m beschränkt wird.

Aus der US PS 5,042,831 ist ein ausziehbarer Hänger bekannt, bei dem eine Schubstange in einem Profilteil verschiebbar Aufnahme findet. Die Schubstange beginnt jedoch in Höhe der vorderen Achse und das Profilteil endet in Höhe der hinteren Achse, so daß die Spanne zwischen ausgezogenem und zusammengeschobenem Zustand recht gering ist. Auch ist bei dieser Version eines in der Länge variablen Hängers die Ladefläche immer oberhalb der Radachsen und kann auch nicht unter die Achshöhe abgesenkt werden.

Die DE-AS 26 18 465 offenbart einen Tiefladesattelanhänger, bei dem die Aufnahme für die Schubstange zwischen den Rädern des Fahrwerks angeordnet ist. Auch hier liegen die Teile der Teleskopverbindung oberhalb der Radachsen, wodurch die Höhe der Ladefläche eine bestimmte Höhe (zumindest die des Radradiuses) nicht unterschreiten kann.

Aufgabe der Erfindung ist es daher, ein Fahrzeug zu schaffen, das ein möglichst großes Maß an Flexibilität in Bezug auf seinen Einsatz gewährleistet.

Diese Aufgabe wird nach der Erfindung durch die im Anspruch 1 definierten Merkmale gelöst.

Durch die erfindungsgemäße Ausgestaltung des Fahrzeuges kann nun im Gegensatz zu den bekannten Fahrzeugen die gesamte Länge des Fahrzeuges, also auch einschließlich der Länge des Trägerverbandes beziehungsweise des Fahrwerkes, für die Verlängerung bzw. das Zusammenschieben genutzt werden. Die Schubstange wird dabei in das Fahrwerk des Nachlauffahrwerks oder des Vorlauffahrwerkes eingeschoben, so dass einerseits eine längere Schubstange vorgesehen werden kann und andererseits ein weiteres Einschieben, falls gewünscht auch bis zu einem vollständigen Zusammenschieben der beiden Trägerverbände, erfolgen kann. Die erfindungsgemäße Ausgestaltung erlaubt, daß das Fahrzeug bei gleicher Nutzlänge kürzer gebaut werden kann, wodurch neben der höheren Flexibilität ein geringeres Gewicht des Fahrzeuges resultiert. Umgekehrt bedeutet dies natürlich, daß die Nutzlast gegebenenfalls erhöht werden kann. Die Flexibilität des Fahrzeuges steigt. Im Gegensatz zu den Lösungen im Stand der Technik, erlaubt die erfindungsgemäße Ausgestaltung, daß das Fahrzeug bei Leerfahrten auf ein Maß reduziert werden kann, welches einen vernünftigen Betrieb zuläßt. Dabei stehen keine zusätzlichen Fahrzeugteile hervor, das Fahrzeug schließt wie üblich mit dem Fahrwerk ab.

Die Schubstange ist im eingeschobenen Zustand des Fahrzeuges mit einem ihrer Enden zwischen den Rädern des Fahrzeuges angeordnet. Bei dieser Ausgestaltung ist vorgesehen, daß die Schubstange einfach ausgebildet ist und zum Beispiel mittig, zwischen den beiden Rädern angeordnet ist.

Nach der Erfindung ist vorgesehen, daß die Schubstange auf der Höhe oder unterhalb der Radachse beziehungsweise der Achse des Rades angeordnet ist. Hierdurch wird erreicht, daß auch bei Tiefbettfahrzeugen, also bei Fahrzeugen, die Güter mit extremen Höhen transportieren sollen, der erfindungsgemäße Vorschlag realisiert werden kann. Die Schubstange wird so am Fahrzeug realisiert, daß eine geringe Bodenfreiheit verbleibt und bei den Vorzügen der zur Verfügung stehenden Auszugslänge auch eine Nutzhöhe von über 4,0 m zur Verfügung steht. Bei Bodenunebenheiten oder Steigungen ist dabei vorgesehen, daß eine Absenkvorrichtung vorgesehen ist, die umgekehrt natürlich auch ein Anheben der Schubstange gegenüber dem Fahrwerk erlaubt. Die Absenkvorrichtung wird aber dann zum Beispiel bei Brückendurchfahrten und dergleichen aktiviert, um das Gut wieder maximal abzusenken. Die erfindungsgemäße Ausgestaltung erlaubt also eine Optimierung des durch das Fahrzeug zu transportierenden Volumens sowohl in Längsrichtung wie auch in die Höhe.

Alternativ ist es aber auch möglich, die Schubstange im eingeschobenen Zustand neben den Rädern zu positionieren. Es wird dabei der gleiche Vorteil erreicht, nämlich, daß die Länge des Fahrwerkes für den Auszug der Schubstange mit verwendet wird.

Günstigerweise wird dabei vorgesehen, daß die Teleskopverbindung hierbei nicht mit einer, sondern mit zwei oder mehreren Schubstangen ausgestattet ist. Dabei ist es möglich, zum Beispiel zwei außen, neben den Rädern liegende Schubstangen anzuordnen. Diese können dann, wahlweise, zum Beispiel noch durch eine zwischen den Rädern vorgesehene Schubstange, mit gleichem oder unterschiedlichen Höhenniveau, ergänzt werden.

Das Fahrzeug kann ein Sattelzug sein, wobei dann unter dem Begriff Fahrzeug der Auflieger des Sattelzuges verstanden wird. Dieser Auflieger kann lediglich ein hinteres Nachlauffahrwerk aufweisen, bei Spezialfahrzeugen für sehr schwere Lasten kann jedoch auch der Auflieger selbst und nicht nur die Zugmaschine mit einem Fahrwerk versehen sein. Das Fahrzeug kann aber auch ein nicht selbst angetriebener Anhänger für eine Zugmaschine oder auch ein üblicher, selbstangetriebener Lastwagen sein. Im Falle des Anhängers wird die Lastaufnahme von der Deichsel gebildet, im Falle eines durchgängigen Lastwagens wird sie von einem Bereich des Rahmens bzw. Fahrschemels gebildet werden.

Nach der Erfindung sind die Räder in einer Einzelradaufhängung an dem Fahrwerk gelagert. Diese ermöglicht nicht nur, die Schubstange ohne Vergrößerung der Bauhöhe der Trägerverbände durch das Fahrwerk zu führen, da nun alle Fahrwerkskomponenten zu beiden Seiten der Schubstange angeordnet sind, sondern erlaubt gleichzeitig auch eine effektive Konstruktion zum Absenken des Fahrzeuges, was entweder zum einfacheren Beladen oder aber auch zum Unterqueren von niedrigen Brücken und Schildern oder Passieren von Tunneln benötigt werden kann.

Die Schubstange ist mit einem der beiden Trägerverbände fest verbunden, während der gegenüberliegende Trägerverband mit der hülsenartigen Aufnahme für die Schubstange versehen ist. So kann die Schubstange unter den hinteren Trägerverband oder auch unter den vorderen Trägerverband geschoben werden. Es ist ferner möglich, dass beide Trägerverbände eine hülsenartige Aufnahme aufweisen, so dass eine doppelte Verschiebemöglichkeit vorhanden ist.

Durch die erfindungsgemäße Ausgestaltung können jetzt beispielsweise im Falle eines Sattelaufliegers, bei gleichbleibender Gesamtlänge des Fahrzeugs von etwa 15 m, maximale Längen der Lastfläche von 12,5 m erzielt werden, während die maximale Bettlänge bei herkömmlichen Fahrzeugen etwa 8,5 m beträgt. Bei einem Sattelauflieger mit einem eigenen Vorlauffahrwerk kann gar bei einer Zuglänge von 23 m und einem Auszug von 8 m eine Gesamtlänge der Lastfläche von 17 m erreicht werden. Bei herkömmlichen Fahrzeugen dagegen konnte mit diesem Fahrzeug mit gleicher Gesamtlänge lediglich eine Lastfläche von bis zu 9,7 m genutzt werden.

Für die Funktion des Fahrzeuges muss dieses ausreichend biegeund knicksicher sein, wodurch bei den angepeilten Nutzlasten die Teleskopverbindung besonderen Anforderungen unterworfen ist. Die hülsenartige Aufnahme für die Schubstange, die im regulären Fahrbetrieb natürlich auf Zug belastet wird, muss hierauf abgestimmt sein. So kann eine Hülse mit beliebigem, eckigem oder rundem Querschnitt gewählt werden oder auch eine von Klammern unterhalb des Trägerverbandes gebildete Einschubmöglichkeit vorgesehen sein.

Falls nur einer der Trägerverbände mit einem Fahrwerk versehen ist, ist dies der hülsenseitige Verband, meist der dem Fahrzeug nachlaufende, obwohl auch eine umgekehrte Anordnung möglich ist. Meist werden jedoch beide Verbände mit einem Fahrwerk ausgestattet sein, so dass die Hülse sowohl im Bereich des Vorlauffahrwerkes als auch im Bereich des Nachlauffahrwerkes mit dem jeweiligen Trägerverband verbunden sein kann. Bei doppelter Einschubmöglichkeit ist dagegen jeder der Verbände mit einer Aufnahme für die Schubstange versehen.

Bevorzugt ist die Lastfläche absenkbar ausgebildet, um das Beladen einfacher zu gestalten oder die Gesamthöhe des beladenen Fahrzeuges kurzfristig absenken zu können, um beispielsweise Hindernissen auszuweichen. Hierzu können die Räder des Fahrwerks schwenkbar an dem vorderen und hinteren Trägerverband gelagert sein. Soll nur eine einfachere Belademöglichkeit geschaffen werden, ist es oft ausreichend, wenn nur die hinteren Räder absenkbar sind. Soll dagegen die gesamte Lastfläche absenkbar sein oder dem Fahrzeug die Flexibilität der Höhenabsenkung zugefügt werden, werden alle Räder relativ zum Trägerverband absenkbar ausgebildet.

Die Kraft zum Absenken des Fahrzeugs kann zum Beispiel über elektrisch, hydraulisch oder pneumatisch betriebene Teleskopstützen aufgebracht werden, die zwischen der Unterseite des Trägerverbandes und dem das Rad haltenden Schwenkarm angeordnet sind und nach der Art einer Kolben-/Zylindereinheit ausfahrbar sind. Zum Anklappen oder Aufrichten der Schwenkarme an die Unterseite des Trägerverbandes werden die Teleskopstützen eingefahren, so dass der Schwenkarm in Richtung des Fahrwerkes geschwenkt und damit das Fahrzeug abgesenkt wird.

Eine alternative Möglichkeit zum Absenken der Lastfläche besteht in einer vertikalen Verschiebbarkeit der Lagerung der Räder, die durch die Kraft einer Absenkvorrichtung getrieben ist. Bei dieser Ausgestaltung kann die Absenkvorrichtung ebenfalls elektrisch, hydraulisch oder pneumatisch angetrieben sein und von Teleskopstützen gebildet sein. Die Räder sind beispielsweise an einem an dem Trägerverband vertikal verschiebbar gelagerten Achsschenkel angeordnet, wobei zwischen dem Achsschenkel und dem Trägerverband zumindest eine Teleskopstütze zum Ein- oder Ausfahren des Achsschenkel angeordnet ist.

Durch die Anordnung der Schubstange derart, dass sie auf Höhe oder unterhalb der Radachse des Rades (insbesondere in Transportstellung) angeordnet ist, wird zusätzlich Ladehöhe gewonnen.

Anstelle des Achsschenkels kann auch ein Achsträger vorgesehen sein, der beispielsweise v-förmig mit nach oben in Richtung des Trägerverbandes hervorspringenden Enden ausgebildet sein kann, wobei der Achsträger mit einer Teleskopstütze zum Heben des Fahrzeugs in Fahrtstellung zusammenwirkt. Zum Beladen kann dieses Fahrzeug dann über die Teleskopstützen abgesenkt werden. Da die Teleskopstützen gerade im ausgefahrenen Zustand für die Übertragung von Kräften rechtwinklig zur Kolbenachse nur unzureichend geeignet sind, weist der Achsträger zusätzlich an den freien Enden des Achsträgers jeweils einen in dem Trägerverband verschiebbar geführten, nach oben hervorspringenden Mitnehmer auf, der die durch den Roll- und Fahrwiderstand der Räder hervorgerufene Kraft von den Reifen auf den Trägerverband überträgt und so die Teleskopstützen entlastet.

Die Lastfläche kann ein Tiefbett sein, falls jedoch eine möglichst große durchgehende Fläche benötigt wird, kann zumindest in Fahrposition die Lastfläche auch auf das Niveau der oberen Flächen der Trägerverbände angehoben werden. Durch das Ausziehen des Fahrzeuges entsteht zunächst vor oder hinter der Lastfläche ein Freiraum, der freigelassen werden kann, wenn eine entsprechende Standfläche nicht benötigt wird. Dies ist zum Beispiel dann der Fall, wenn durch das Ausziehen des Fahrzeuges nur Platz für überstehende Anbauteile der Last geschaffen werden soll.

wird dagegen der zusätzliche Raum auch als Standfläche benötigt, kann die Lastfläche auch auf die hinzugewonnene Fläche ausgebaut werden, etwa durch Anbauelemente, die in den entstehenden Spalt eingelegt werden und mit der bestehenden Lastfläche verbunden werden. Hierzu können bevorzugt auch zwei Teleskopverbindungen mit zwei Schubstangen und zwei hülsenartigen Aufnahmen vorgesehen werden, damit ein seitliches Kippen der zusätzlichen Elemente durch die breitere Auflagefläche vermieden werden kann. Es kann jedoch auch einfach nach dem Ausziehen des Fahrzeugs anstelle der ursprünglichen eine größere Lastfläche eingelegt werden.

In einer Variante der Erfindung ist vorgesehen, daß die Räder als Einzel- und/oder auch als Zwillingsräder ausgebildet sind. Es ist möglich, an einem Fahrzeug sowohl Einzel- als auch Zwillingsräder kombiniert einzusetzen. Inzwischen sind auch Einzelräder bekannt, die ebenfalls eine hohe Tragkraft aufzunehmen vermögen, weswegen nicht immer auf ein Zwillingsrad abgestellt werden muß, um hohe Lasten zu transportieren. Das Fahrzeug kann daher auch nur mit Einzelrädern als Räder ausgestattet sein. Dabei kann das Fahrzeug derart ausgebildet sein, daß die Räder einander paarweise gegenüberliegend angeordnet sind. Es ist aber auch möglich, daß die Räder versetzt zueinander angeordnet sind.

In einer weiteren bevorzugten Ausgestaltung der Erfindung ist vorgesehen, daß das Fahrwerk mehrere Spurweiten aufweist. Dadurch ist es möglich, das Fahrzeug stabiler abzustützen. Des weiteren ist vorgesehen, daß die Spurweite des Fahrwerkes durch eine teleskopartige Ausgestaltung des Trägerverbundes und/oder der Lastfläche einstellbar ist. Der Trägerverbund, oder bei einem vorderen und hinteren Trägerverbund beide Trägerverbände, ist/sind mit dem Fahrwerk verbunden. Hierzu ist zum Beispiel ein Rahmen vorgesehen. Es ist möglich, eine teleskopartige Ausgestaltung des Rahmens zu wählen, der eine Ausziehbarkeit rechtwinklig zur normalen Fahrtrichtung erlaubt. Durch diese Ausgestaltung wird es möglich, daß, je nach Zuladebedarf, auch bei außermittig gelagerten Lasten keine Kippgefahr des Fahrzeuges entsteht. Ein solch erfindungsgemäß ausgestaltetes Fahrzeug erlaubt also eine hohe Variabilität in allen drei Raumrichtungen, wodurch seine Flexibilität äußerst groß ist.

weitere Merkmale der Erfindung ergeben sich aus den Unteransprüchen und aus der nachfolgenden Beschreibung bevorzugter Ausführungsbeispiele der Erfindung anhand der Zeichnungen.

Die Zeichnungen zeigen:
- Fig. 1: eine Draufsicht auf eine als einfacher Auflieger ausgebildete Ausgestaltung der Erfindung,
- Fig. 2: eine Seitenansicht der in Figur 1 dargestellten Ausführungsform,
- Fig. 3: eine Draufsicht auf eine als Auflieger mit Vorlauffahrwerk ausgebildete Ausgestaltung der Erfindung,
- Fig. 4: eine Seitenansicht der in Figur 3 dargestellten Ausführungsform,
- Fig. 5: eine Draufsicht auf eine als Anhänger ausgebildete Ausgestaltung der Erfindung,
- Fig. 6: eine Seitenansicht der in Figur 5 dargestellten Ausführungsform;
- Fig. 7: eine Detailansicht einer höheneinstellbaren Radlagerung;
- Fig. 8: eine Seitenansicht einer weiteren Ausgestaltung des erfindungsgemäßen Fahrzeuges;
- Fig. 9: eine Draufsicht nach Fig. 8;
- Fig. 10: eine weitere Variante des erfindungsgemäßen Fahrzeuges in Seitenansicht;
- Fig. 11: eine Draufsicht nach Fig. 10;
- Fig. 12: in einer Seitenansicht eine Detailansicht einer Radaufhängung, gemäß der Erfindung und
- Fig. 13: eine schematische Draufsicht nach Fig. 12.

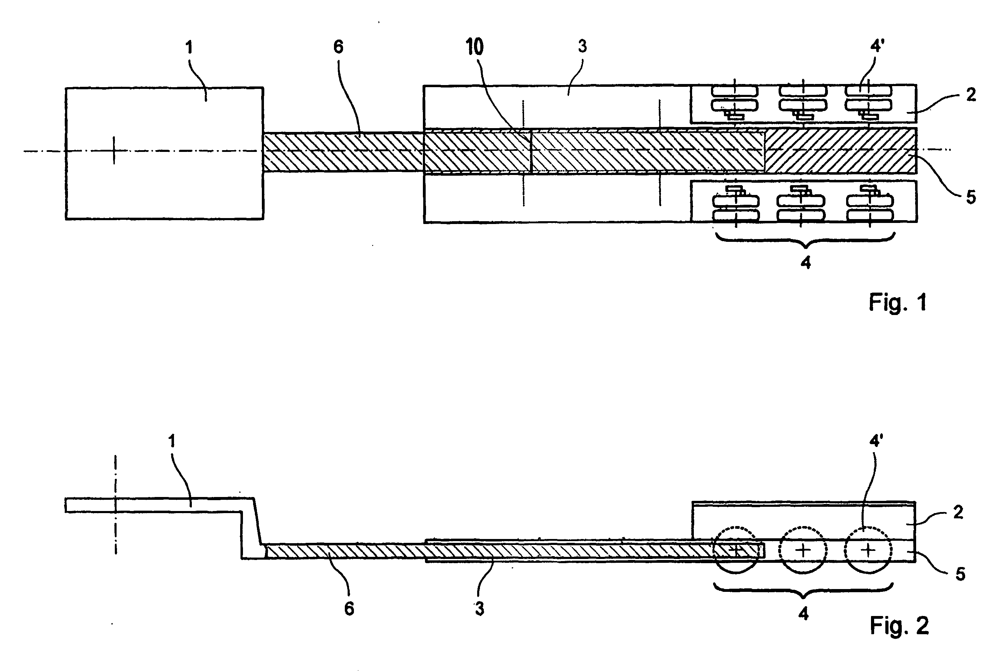

In den Figuren 1 und 2 ist eine erste Ausgestaltung der Erfindung gezeigt, in Figur 1 in einer Draufsicht und in Figur 2 in einer Seitenansicht im Schnitt. Es handelt sich hierbei um den Auflieger eines Sattelzuges, der von einem vorderen Trägerverband 1 und einem hinteren Trägerverband 2 gebildet ist. Die beiden Trägerverbände 1,2 sind über eine Teleskopverbindung miteinander verbunden, die von einer hülsenartigen Aufnahme 5 und einer in diese hülsenartige Aufnahme 5 eingeschobenen Schubstange 6 gebildet ist. Der hintere Trägerverband 2 weist in seinem dem vorderen Trägerverband abgewandten Bereich ein Fahrwerk 4 auf, das von einzelnen Rädern 4' gebildet ist. Je nach vorgesehener Belastbarkeit des Fahrzeuges können, wie hier gezeigt, sechs Zwillingsreifen oder mehr oder auch weniger Reifen vorgesehen sein.

Zwischen dem vorderen Trägerverband 1 und dem hinteren Trägerverband 2 ist eine Lastfläche 3 angeordnet, die die Nutzlast des Fahrzeuges aufnimmt. Der Abstand zwischen dem vorderen Trägerverband 1 und dem hinteren Trägerverband 2 ist durch die Teleskopverbindung variierbar, wobei die Schubstange 6 aus der hülsenartigen Aufnahme 5 herausgezogen werden kann und in verschiedenen Positionen festgelegt werden kann. Die hydraulischen Antriebe sowie die elektrischen Leitungen für die im hinteren Trägerverband 2 angeordneten Antriebe bzw. sonstigen Funktionselemente werden dabei bevorzugt durch die Schubstange 6 und die Aufnahme 5 oder nur in der Aufnahme 5 über flexible Leitungen beziehungsweise ausziehbare Leitungen versorgt.

Die Schubstange 6 und die Aufnahme 5 durchsetzen das Fahrwerk 4', so dass eine deutlich vergrößerte Ausziehmöglichkeit des Fahrzeuges erzielt werden kann. Die hülsenartige Aufnahme 5 kann ein Flachkanal sein, in den die dann mit Rechteckquerschnitt ausgebildete Schubstange 6 eingeschoben ist. Zum knicksicheren Verbinden der beiden Trägerverbände 1, 2 muss die Schubstange 6 mit mindestens einer bestimmten, von der Dicke der Schubstange und der maximalen Belastung abhängigen Länge, beispielsweise 2m bis 3m, in die Aufnahme 5 eingeschoben sein.

Erfindungsgemäß wird auch vorgeschlagen, daß nicht nur eine Schubstange 6 in einer Aufnahme 5 geführt ist, sondern gegebenenfalls zwei oder mehrere Profile nebeneinander parallel angeordnet sind.

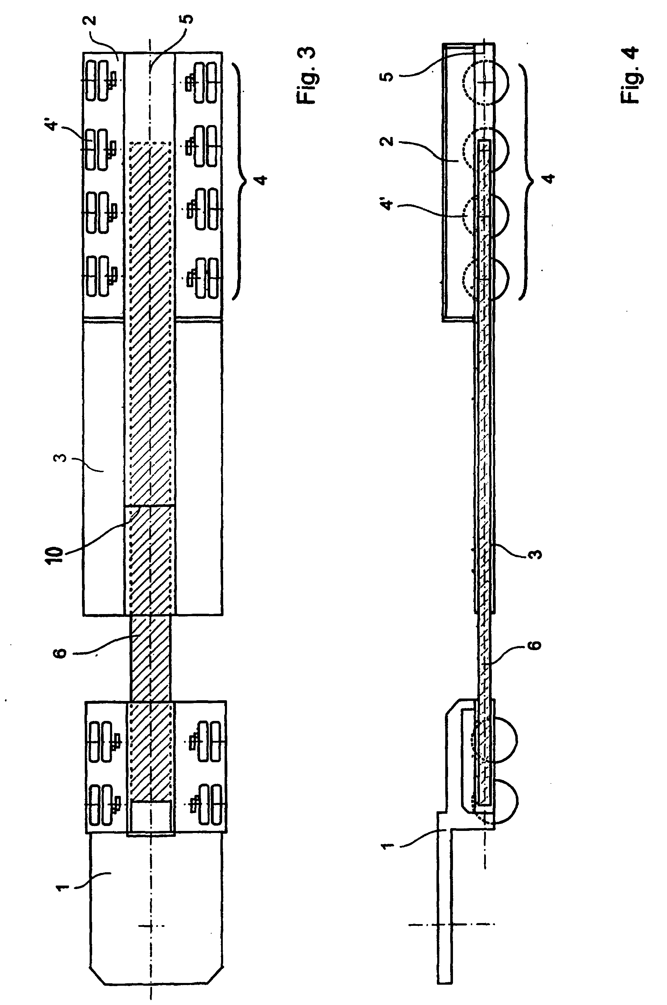

In den Figuren 3 und 4 ist eine weitere Ausgestaltung der Erfindung dargestellt, bei der neben der hinteren Ausziehmöglichkeit zusätzlich im Bereich des vorderen Trägerverbandes ein Fahrwerk 4' angeordnet ist. Derartige Ausgestaltungen werden für sehr schwere Lasten verwendet. Hier kann die Schubstange 6 auch in das Fahrwerk 4' des vorderen Trägerverbandes 1 eingeschoben werden, wodurch eine noch größere Flexibilität des Fahrzeuges erreicht wird. Auch diese Ausgestaltung ist als Sattelauflieger ausgebildet. Die Verbindung des Trägerverbandes 1 mit der Schubstange 6 erfolgt im wesentlichen auf gleiche Art wie im hinteren Bereich. Hier kann anstelle einer unmittelbaren Befestigung der Schubstange 6 an dem vorderen Trägerverband 1 eine weitere hülsenartige Aufnahme vorgesehen sein, so dass die Schubstange 6 mit beiden Enden verschiebbar in einem der Trägerverbände 1 oder 2 gelagert ist.

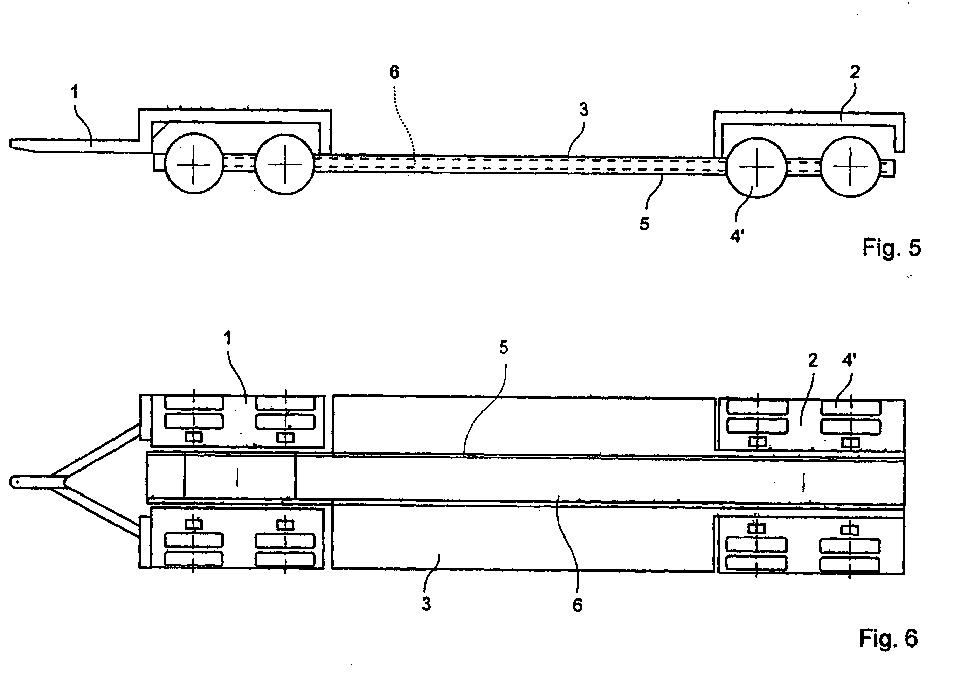

In den Figuren 5 und 6 schließlich ist eine dritte Ausgestaltung der Erfindung gezeigt. Hierbei handelt es sich um einen Anhänger ohne eigenen motorischen Antrieb, der ebenfalls, wie die in den Figuren 3 und 4 dargestellte Variante, einen vorderen Trägerverband 1 und einen hinteren Trägerverband 2 aufweist, in den jeweils eine Aufnahme 5 integriert ist.

In Fig. 1 und 3 sind beispielhaft die Grenzen 10 angedeutet, bis zu welchen das erfindungsgemäße Fahrzeug durch Herausziehen der Schubstange 6 aus der Aufnahme 5 verlängert werden kann. Aus Fig. 1 und 3 ergibt sich unmittelbar, daß sich die zur Verfügung stehende Länge deutlich erhöht, da die Schubstange im eingeschobenen Zustand zwischen den Rädern liegt. Die Grenze 10 ist dabei so angeordnet, daß sichergestellt ist, daß keine Knickgefahr besteht. Diese beträgt üblicherweise ca. 2,0 m.

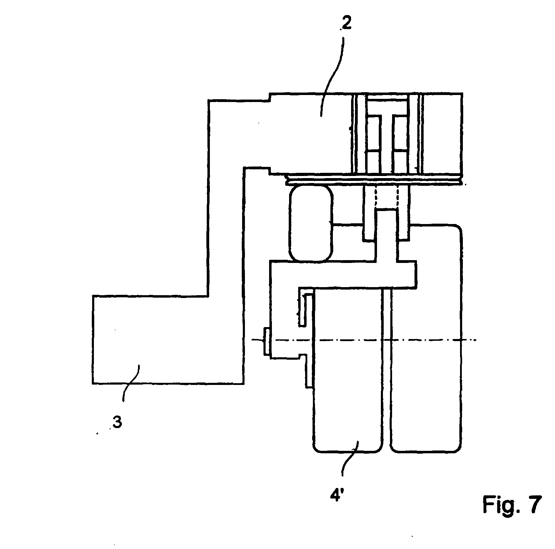

Figur 7 zeigt eine Detailansicht einer Aufhängung eines Rades 4' des Fahrwerkes. Das Rad 4' ist an einem Achsträger gelagert, der schwenkbar mit dem hinteren Trägerverband 2 verbunden ist. Der Achsträger ist über einen beispielsweise mit einem Hydraulikdruck beaufschlagbaren Kolben antreibbar, so dass der hintere Trägerverband 2 bei Verschwenken aller Achsträger des Fahrwerkes 4' abgesenkt bzw. angehoben werden kann. Dies kann dazu genutzt werden, um das Fahrzeug zu beladen, vorübergehend abzusenken, um mit verminderter Bodenfreiheit Streckenabschnitte mit verringerter Durchfahrtshöhe zu passieren oder auch, um vorübergehend die Bodenfreiheit des Fahrzeuges zu erhöhen, um Bodenwellen oder ähnliche Fahrbahnunebenheiten ohne Kontakt passieren zu können.

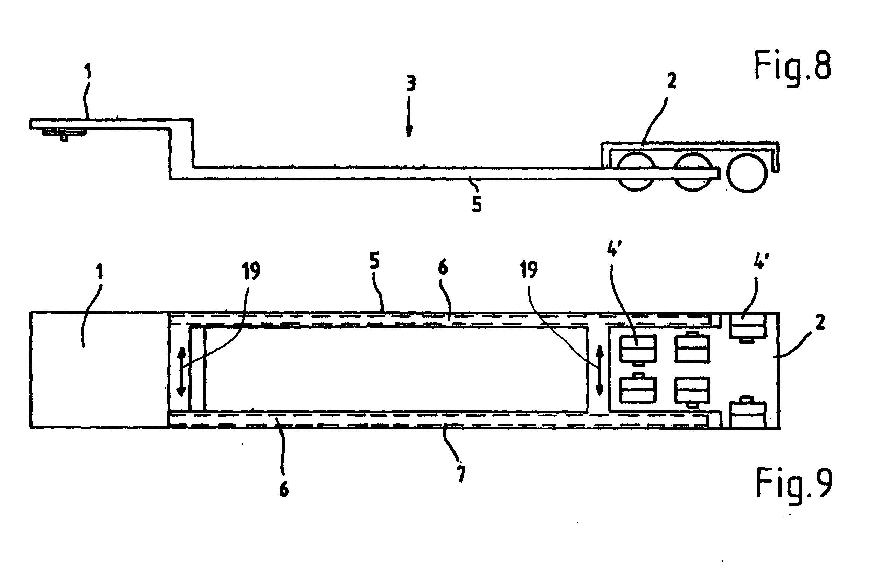

In den Fig. 8 bis 11 sind zwei weitere Varianten des erfindungsgemäßen Fahrzeuges gezeigt. Im Gegensatz zu der Ausgestaltung nach zum Beispiel Fig. 3 ist in Fig. 9 gezeigt, daß zwei Schubstangen 6, 7 vorgesehen sind, die sich am Rand des Fahrzeuges längserstreckend befinden und im hinteren Bereich neben den Rädern 4' angeordnet sind. Durch diese Ausgestaltung wird eine höhere Stabilität des Fahrzeuges erreicht, da ein rahmenartiger Teleskopverbund möglich ist. Gleichzeitig können zum Beispiel große, zylinderartige Körper einfach transportiert werden, da diese auf den jeweils seitlich verlaufenden Aufnahmen 5 gelagert werden. Dabei besteht auch die Möglichkeit, den zylindrischen Körper zwischen den hülsenartigen Aufnahmen 5 nach unten, eigentlich nur begrenzt durch die Bodenfreiheit des Fahrzeuges, vorstehen zu lassen. In Fig. 9 ist mit dem Pfeil 19 angedeutet, daß das Fahrzeug auch in der horizontalen Komponente, die rechtwinklig zur Schubstange orientiert ist, vergrößerbar beziehungsweise variierbar ausgestaltet ist.

Günstigerweise besteht der Trägerverband beziehungsweise das Fahrzeug aus zwei teleskopartig ineinandergestellten Teilrahmen, die, entsprechend der zu transportierenden Last, eine Veränderung der Breite des Fahrzeuges erlauben. Hieraus ergibt sich, daß die Spur des Fahrzeuges einstellbar ist, erfindungsgemäß wird auch vorgesehen, daß das Fahrzeug zur Verbesserung der Fahreigenschaften mehrspurig ausgebildet ist.

Dabei ist vorgesehen, daß das Fahrwerk 4 zwei verschiedene Spurweiten aufweist. In dem ersten, innenliegenden Bereich, in welchem die Schubstange neben den Rädern liegt, ist eine engere Spurweite gewählt. Am Ende ist noch ein Räderpaar (hier als Zwillingsrad angedeutet, es können aber auch Einzelräder sein) mit normaler Spurweite angeordnet, um dem Fahrzeug eine ausreichende Seitenstabilität zu geben.

Diese Achse beziehungsweise dieses Räderpaar (zum Beispiel bei Einzelradaufhängung) kann dabei im hinteren Trägerverbund 2 oder auch im vorderen Trägerverbund 1 angeordnet sein.

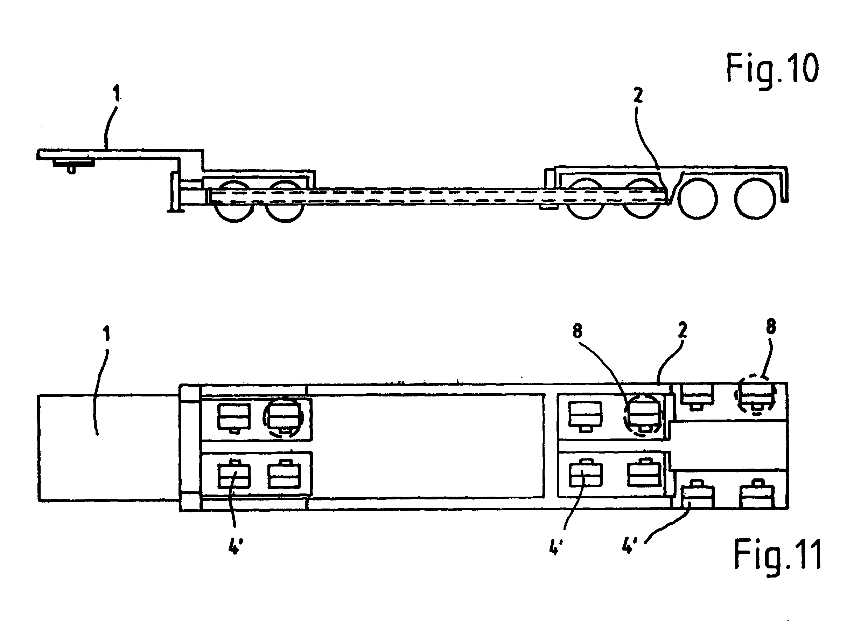

In Fig. 10, 11 ist vorgesehen, daß der vordere Trägerverbund 1 ebenfalls von einem vorderen Fahrwerk unterstützt ist. Auch hier erstreckt sich die Schubstange neben den Rädern 4', um eine möglichst große Auszugslänge zu erreichen.

Dabei ist es natürlich auch möglich, daß sich die Schubstange sowohl neben oder zwischen den Rädern 4' des vorderen wie auch des hinteren Fahrwerkes 4 erstreckt.

Auch hier, insbesondere in Fig. 11 zu ersehen, sind im hinteren Fahrwerk Räder 4' angeordnet, die eine weitere, größere Spurweite aufweisen und nicht mehr neben beziehungsweise zwischen den Schubstangen 6, 7 angeordnet sind. Dies kann in gleicher Weise auch im vorderen Fahrwerk vorgesehen sein.

In Fig. 11 sind Freidrehkreise 8 angedeutet, die andeuten, daß die Räder 4' um 360° drehbar gelagert sind. Dies wird durch eine entsprechende Einzelradaufhängung und entsprechende Anlenkung der Räder 4' erreicht.

Die "innen" liegenden Räder 4' (bezogen auf die Schubstange 6, 7) werden zum Reifenwechseln rechtwinklig zur Fahrtrichtung gestellt, wobei die Spurhaltestangen beziehungsweise die Spurstangen gelöst werden und dann das Rad, zum Beispiel durch einen hydraulischen oder motorisch unterstützten Lenkantrieb oder dergleichen, rechtwinklig verstellt wird. Dann wird das Rad, wie bekannt, demontiert und gewechselt. Das Rad wird dann nicht, wie sonst üblich, seitlich entnommen, sondern zwischen den Rädern ausgebaut und nach oben herausgehoben.

Die in Fig. 8 bis 11 gezeigte Ausgestaltung des Fahrzeuges dient zum Beispiel für den Transport von Kesseln, als sogenannte Kesselbrücke.

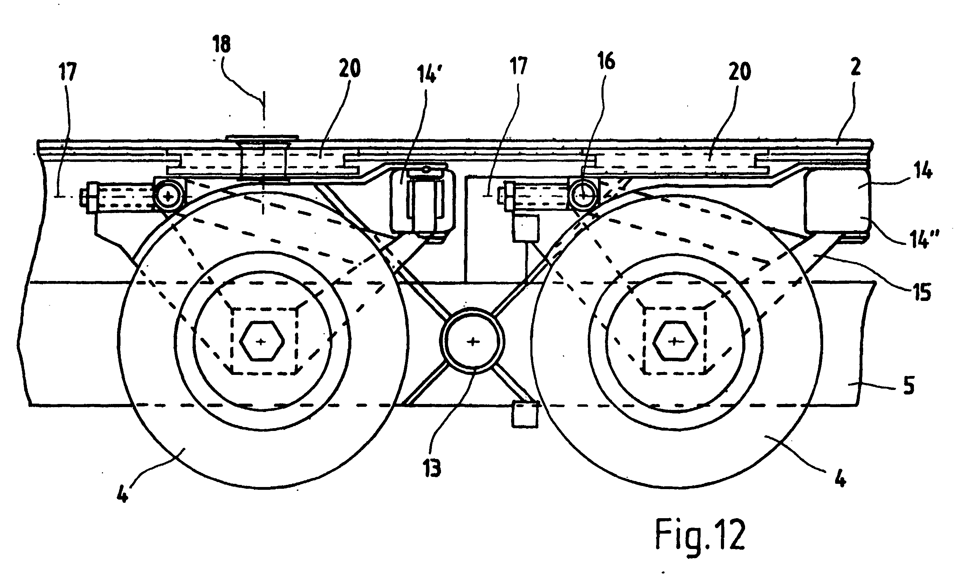

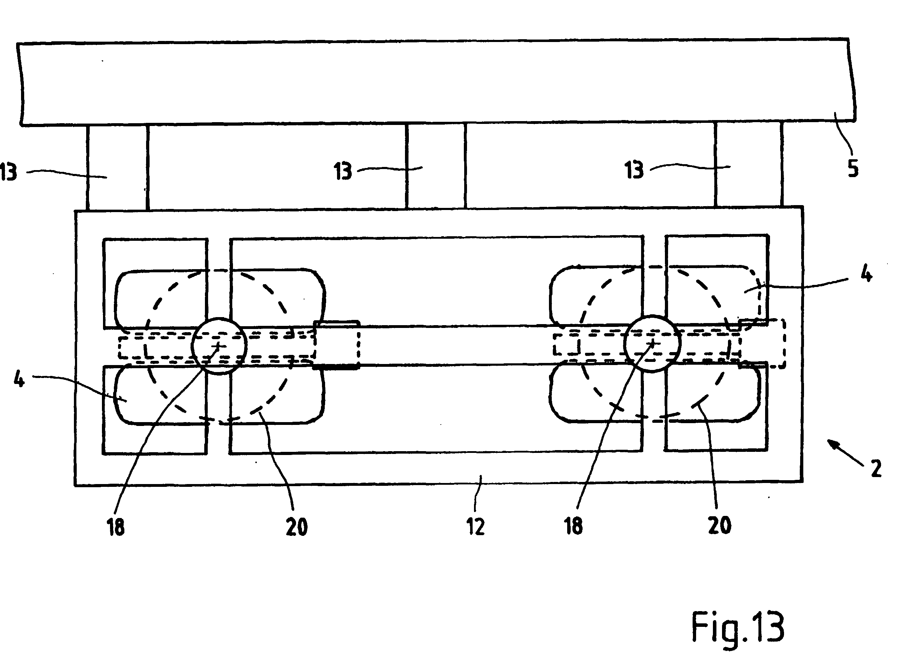

In den Fig. 12, 13 ist eine weitere Ausgestaltung der Einzelradaufhängung des erfindungsgemäßen Fahrzeuges gezeigt. Das Fahrwerk 11 des Trägerverbandes 2 wird dabei gebildet von einem Rahmen 12, welcher durch Querstreben 13 mit der Aufnahme 5 verbunden ist. Die Querstreben 13 können dabei horizontal oder auch schräg beziehungsweise winklig angeordnet werden, die nähere Ausgestaltung ist hier nicht gezeigt. Die Querstreben 13 sind ausreichend stabil, um die anfallende Last des Fahrzeuges auf das jeweilige Teilfahrgestell zu übertragen.

Bei der in Fig. 12, 13 gezeigten Ausgestaltung ist das Rad 4 um drei, jeweils rechtwinklig aufeinanderstehenden Achsen beweglich gelagert. Die Absenkvorrichtung 14 ist zum Beispiel derart ausgebildet, daß ein hydraulisch 14' oder pneumatisch 14'' wirkender Arbeitszylinder oder Hebekissen oder dergleichen vorgesehen ist, der auf einen Träger 15 wirkt, der am Fahrwerk 11 um die Drehachse 16 schwenkbar gelagert ist. Die Drehachse 16 ist wiederum parallel zur Längsausrichtung des Fahrzeuges um die Kippachse 17 kippbar. Die Drehachse 16 und die Kippachse 17 stehen rechtwinklig aufeinander.

An dem Rahmen 12 ist ein Drehkranz 20 vorgesehen, der die eigentliche Radaufhängung hält. Der Drehkranz 20 erlaubt eine Verdrehung des gesamten Rades um die vertikale Drehachse 18. Die Ausgestaltung des hier gezeigten Fahrwerkes ist so getroffen, daß sogar eine Rechtwinkligstellung der Räder 4 bezüglich der normalen Fahrtrichtung möglich ist, das bedeutet, das Fahrzeug kann quer zur normalen Förderrichtung bewegt werden, was die Rangierbarkeit eines solchen Fahrzeuges sehr steigert.

In einer bevorzugten Ausgestaltung der Erfindung ist vorgesehen, daß an jedem Trägerverband je mindestens eine Aufnahme vorgesehen ist und die Schubstange in beiden Aufnahmen bewegbar, festlegbar und gegebenenfalls austauschbar ist. Die Schubstange wird bei diesen erfindungsgemäßen Varianten als mit dem Fahrzeug nicht fest zu verbindendem Teil. der Teleskopverbindung eingesetzt. Dadurch wird eine hohe Flexibilität erreicht, da einfach durch den Austausch der Schubstange die verfügbare Länge variiert werden kann, für den Leertransport ist das Fahrzeug wieder zusammenschiebbar. Es ist möglich, auch bei dieser Variante zwei oder mehrere Schubstangen parallel anzuordnen.

## Patentansprüche

1. Fahrzeug mit ausziehbarem Tiefbett zum Transport einer schweren Sattellast mit einem vorderen Trägerverband (1), der mit einer vorderen Lastaufnahme auf dieser dreh- bzw. schwenkbar verbunden ist, einer Lastfläche (3), einem hinteren Trägerverband (2) und zumindest einem Fahrwerk (4), das unterhalb, vor und/oder hinter der Lastfläche (3) angeordnet und von gegenüberliegenden Rädern (4') gebildet ist, wobei der vordere Trägerverband (1) über eine Teleskopverbindung mit dem hinteren Trägerverband (2) verbunden ist und die Teleskopverbindung ein Verschieben des vorderen Trägerverbandes (1) relativ zum hinteren Trägerverband (2) in Längsrichtung ermöglicht und von einer in eine hülsenartige Aufnahme (5) eingeschobenen und in dieser verschieb- und festlegbar gelagerten Schubstange (6) gebildet ist, wobei die Schubstange (6) in einem eingeschobenen Zustand des Fahrzeugs mit einem ihrer Enden zwischen und/oder neben den Rädern (4') des Fahrwerks (4) angeordnet ist, **dadurch gekennzeichnet, dass** die Räder (4') in einer Einzelradaufhängung an dem Fahrwerk (4) gelagert sind und die Schubstange auf oder unterhalb der Höhe der Radachse der Räder (4') angeordnet ist.

2. Fahrzeug nach Anspruch 1, **dadurch gekennzeichnet, dass** die Teleskopverbindung zwei oder mehrere, im Wesentlichen parallel verlaufende Schubstangen (6, 7) aufweist, die je in einer Aufnahme (5) geführt sind.

3. Fahrzeug nach einem oder beiden der vorhergehenden Ansprüche, **dadurch gekennzeichnet, dass** die Schubstange (6) im Bereich des von den Achsträgern und Rädern (4') gebildeten Fahrwerks (4) angeordnet ist.

4. Fahrzeug nach einem oder mehreren der vorhergehenden Ansprüche, **dadurch gekennzeichnet, dass** die hülsenartige Aufnahme (5) von einer durchgängig an dem vorderen Trägerverband (1) oder an dem hinteren Trägerverband (2) angeordneten Hülse gebildet ist, wobei dieser hülsenseitige Trägerverband das Fahrwerk (4) aufweist und die Hülse mit einem ihrer Endbereiche zwischen beziehungsweise neben den Rädern (4') des Fahrwerks (4) angeordnet ist und mit dem Trägerverband verbunden ist.

5. Fahrzeug nach einem oder mehreren der vorhergehenden Ansprüche, **dadurch gekennzeichnet, dass** der hintere Trägerverband (2) oder vordere Trägerverband (1) ein zusätzliches Fahrwerk aufweist und die Schubstange (6) mit ihrem, dem hülsenseitigen Trägerverband abgewandten Ende mit dem zweiten, schubstangenseitigen Trägerverband verbunden ist.

6. Fahrzeug nach einem oder mehreren der vorhergehenden Ansprüche, **dadurch gekennzeichnet, dass** die Räder des Fahrwerkes des zweiten Trägerverbandes über Einzelradaufhängungen mit dem zweiten Trägerverband verbunden sind und die Schubstange (6) mit ihrem mit dem zweiten Trägerverband verbundenen Ende zwischen den Rändern (4'), das Fahrwerk (4) durchsetzend, angeordnet ist.

7. Fahrzeug nach einem oder mehreren der vorhergehenden Ansprüche, **dadurch gekennzeichnet, dass** an jedem Trägerverband (1, 2) je mindestens eine Aufnahme (5) vorgesehen ist und die Schubstange (6) in beiden Aufnahmen (5) bewegbar, festlegbar und gegebenenfalls austauschbar ist.

8. Fahrzeug nach einem oder mehreren der vorhergehenden Ansprüche , **dadurch gekennzeichnet, dass** zum Absenken der Lastfläche (3) die Räder (4') des Fahrwerks (4) gegen die Kraft einer Absenkvorrichtung schwenkbar oder vertikal verschiebbar an dem vorderen Trägerverband (1) und/oder an dem hinteren Trägerverband (2) gelagert sind.

9. Fahrzeug nach Anspruch 8, **dadurch gekennzeichnet, dass** die Absenkvorrichtung von elektrisch, hydraulisch oder pneumatisch betriebenen Teleskopstützen gebildet ist, wobei die Räder an einem mit dem Trägerverband (1,2) verbundenen Schwenkarm oder vertikal verschiebbar gelagerten Achsschenkel gelagert sind und zwischen den Schwenkarmen und dem Trägerverband (1,2) zumindest eine Teleskopstütze zum Anklappen oder Aufrichten der Schwenkarme an die oder von der Unterseite des Trägerverbandes (1,2) angeordnet ist.

10. Fahrzeug nach einem oder mehreren der vorhergehenden Ansprüche, **dadurch gekennzeichnet, dass** die Teleskopstützen mit einem Ende mit dem Trägerverband (1,2) und mit dem gegenüberliegenden Ende mit einem V-förmigen Achsträger verbunden sind, wobei die freien Enden des Achsträgers jeweils einen zusätzlichen, nach oben hervorspringenden und verschiebbar in dem Trägerverband (1,2) geführten Mitnehmer zum Übertragen der Kräfte in Fahrtrichtung aufweisen.

11. Fahrzeug nach einem oder mehreren der vorhergehenden Ansprüche, **dadurch gekennzeichnet, dass** die Lastfläche (3) von einem zwischen dem vorderen Trägerverband (1) und dem hinteren Trägerverband (2) angeordneten, mit dem vorderen Trägerverband (1) oder dem hinteren Trägerverband (2) verbundenen und auf der hülsenartigen Aufnahme (5) aufliegenden Tiefbett gebildet ist.

12. Fahrzeug nach einem oder mehreren der vorhergehenden Ansprüche, **dadurch gekennzeichnet, dass** das Fahrzeug als Anhänger ausgebildet ist, wobei die vordere Lastaufnahme von einer Deichsel gebildet ist, oder daß das Fahrzeug als Auflieger eines Sattelzuges ausgebildet ist, wobei die Lastaufnahme von einem Auflagelager des vorderen Trägerverbandes (1) zur Auflage auf eine Zugmaschine gebildet ist, oder daß das Fahrzeug als selbstfahrendes Schwerlastfahrzeug ausgebildet ist, wobei die Lastaufnahme von einer insbesondere schweißtechnischen Verbindung des vorderen Trägerverbandes (1) mit einem Rahmen des vorderen, motorisch angetriebenen Fahrzeugteils gebildet ist.

13. Fahrzeug nach einem oder mehreren der vorhergehenden Ansprüche, **dadurch gekennzeichnet, dass** die Räder zumindest teilweise um eine Vertikalachse (18) lenk- und/oder drehbar an dem vorderen Trägerverband (1) oder dem hinteren Trägerverband (2) gelagert sind und/oder die Räder um eine horizontale Achse (17) kippbar und/oder die Räder (4') als Einzel- und/oder Zwillingsräder ausgebildet sind.

14. Fahrzeug nach Anspruch 13, **dadurch gekennzeichnet, daß** die Räder um eine zusätzliche Drehachse (16) schwenkbar gelagert sind.

15. Fahrzeug nach Anspruch 14, **dadurch gekennzeichnet, daß** die zusätzliche Drehachse (16) und die horizontale Ache (17) rechtwinklig aufeinanderstehen.

16. Fahrzeug nach einem oder mehreren der vorhergehenden Ansprüche, **dadurch gekennzeichnet, dass** die Schubstange (3) lösbar, insbesondere formschlüssig über wenigstens eine Bolzenverbindung mit dem schubstangenseitigen Trägerverband (1 oder 2) verbunden ist.

17. Fahrzeug nach Anspruch 16, **dadurch gekennzeichnet, dass** der Trägerverband (1 oder 2) zum Aufnehmen der Schubstange (3) eine Aufnahmehülse aufweist, in die die Schubstange (3) einschiebbar ist und in der die Schubstange (3) über die Bolzenverbindung arretierbar ist.

18. Fahrzeug nach einem oder mehreren der vorhergehenden Ansprüche, **dadurch gekennzeichnet, dass** das Fahrwerk (4) mehrere Spurweiten aufweist und/oder die Spurweite des Fahrwerks durch eine teleskopartige Ausgestaltung des Trägerverbundes (1, 2) und/oder der Lastfläche (3) einstellbar ist.

19. Fahrzeug nach einem oder mehreren der vorhergehenden Ansprüche, **dadurch gekennzeichnet, dass** die Schubstange (6) das Fahrwerk (4) zumindest im Bereich des hinteren Trägerverbandes (2) durchsetzt.

## Claims

1. Vehicle with a draw-out drop base for transporting a heavy vertical load on tractor with a front carrier assembly (1), which is connected with a front load suspension on this front load suspension in such a way that it can rotate, respectively swivel, with a loading area (3), a rear carrier assembly (2) and at least one chassis (4), which is arranged below, in front of and/or behind the loading area (3) and is formed by opposing wheels (4'), the front carrier assembly (1) being linked via a telescope connection with the rear carrier assembly (2), and the telescope connection enabling a shifting of the front carrier assembly (1) relatively to the rear carrier assembly (2) in longitudinal direction and being formed by a connecting rod (6) pushed in a sleeve-like receiver (5) and supported in it so that it can be moved and fixed, the connecting rod (6) being arranged in a pushed-in position of the vehicle with either of its ends between and/or besides the wheels (4') of the chassis, **characterised in that** the wheels (4') are supported in a single wheel suspension on the chassis (4) and the connecting rod is arranged at the same level of or below the wheel axle of the wheels (4').

2. Vehicle according to claim 1, **characterised in that** the telescope connection has two or more, essentially parallel extending, connecting rods (6, 7) which each are guided in a receiver (5).

3. Vehicle according to one or both of the preceding claims, **characterised in that** the connecting rod (6) is arranged in the region of the chassis (4) formed by the axle supports and wheels (4').

4. Vehicle according to one or more of the preceding claims, **characterised in that** the sleeve-like receiver (5) is formed by a sleeve which is arranged continuously at the front carrier assembly (1) or the rear carrier assembly (2), this sleeve-side carrier assembly comprising the chassis (4), and the sleeve being arranged with one of its end regions between, respectively besides, the wheels (4') of the chassis (4) and being connected with the carrier assembly.

5. Vehicle according to one or more of the preceding claims, **characterised in that** the rear carrier assembly (2) or the front carrier assembly (1) has an additional chassis, and the connecting rod (6) is connected with its end, which is opposite the sleeve-side carrier assembly, with the second, connecting rod-side carrier assembly.

6. Vehicle according to one or more of the preceding claims, **characterised in that** the wheels of the chassis of the second carrier assembly are connected via single wheel suspensions with the second carrier assembly and the connecting rod (6) with its end, which is connected with the second carrier assembly, is arranged between the wheels (4') so that it penetrates the chassis (4).

7. Vehicle according to one or more of the preceding claims, **characterised in that at** each carrier assembly (1, 2) at least one receiver (5) each is provided, and the connecting rod (6) can be moved, fixed and, if necessary, exchanged in either receiver (5).

8. Vehicle according to one or more of the preceding claims, **characterised in that** for lowering the loading area (3) the wheels (4') of the chassis (4) are supported in such a way that they can swivel against the force of a lowering device or move vertically at the front carrier assembly (1) and/or on the rear carrier assembly (2).

9. Vehicle according to claim 8, **characterised in that** the lowering device is formed by telescope supports driven electrically, hydraulically or pneumatically, the wheels being supported on a swivel arm connected with the carrier assembly (1, 2) or on a steering knuckle supported vertically movable, and between the swivel arm and the carrier assembly (1, 2) at least one telescope support being arranged for folding or erecting the swivel arms to or from the bottom of the carrier assembly (1, 2).

10. Vehicle according to one or more of the preceding claims, **characterised in that** the telescope supports are connected with one end to the carrier assembly (1, 2) and with the opposite end to a V-shaped axle support, the free ends of the axle support each having an additional catch which projects upwards and is guided movable in the carrier assembly (1, 2), for transmission of the powers in the direction of motion.

11. Vehicle according to one or more of the preceding claims, **characterised in that** the load area (3) is formed by a drop base arranged between the front carrier assembly (1) and the rear carrier assembly (2), connected with the front carrier assembly (1) or the rear carrier assembly (2) and supported by the sleeve-like receiver (5).

12. Vehicle according to one or more of the preceding claims, **characterised in that** the vehicle is designed as a trailer, the front load suspension being formed by a draw bar or that the vehicle is designed as a trailer of a tractor truck, the load suspension being formed by a bearing of the front carrier assembly (1) for supporting on a towing vehicle, or that the vehicle is designed as an automotive heavy goods vehicle, the load suspension being in particular formed by a welding link of the front carrier assembly (1) with a frame of the front vehicle part which is driven by a motor.

13. Vehicle according to one or more of the preceding claims, **characterised in that** the wheels are supported in such a way that they can at least partly be steered and/or turned around a vertical axis (18) at the front carrier assembly (1) or the rear carrier assembly (2) and/or that the wheels can be tilted around a horizontal axis (17) and/or the wheels (4') are designed as single and/or twin wheels.

14. Vehicle according to claim 13, **characterised in that** the wheels are supported so that they can swivel around an additional rotational axis (16).

15. Vehicle according to claim 14, **characterised in that** the additional rotational axis (16) and the horizontal axis (17) are rectangular to each other.

16. Vehicle according to one or more of the preceding claims, **characterised in that** the connecting rod (3) is linked releasable, in particular positive locking, via at least one bolt connection with the carrier assembly (1 or 2) on the connecting rod side.

17. Vehicle according to claim 16, **characterised in that** the carrier assembly (1 or 2) has for receiving the connecting rod (3) a receiver sleeve into which the connecting rod (3) can be pushed and in which the connecting rod (3) can be stopped via the bolt connection.

18. Vehicle according to one or more of the preceding claims, **characterised in that** the chassis (4) has several wheel gauges and/or the wheel gauge of the chassis can be adjusted by a telescope-like design of the carrier assembly (1, 2) and/or the loading area (3).

19. Vehicle according to one or more of the preceding claims, **characterised in that** the connecting rod (6) penetrates the chassis (4) at least in the region of the rear carrier (2) assembly.

## Revendications

1. Véhicule ayant un châssis surbaissé et extensible destiné au transport de charges lourdes, constitué d'un châssis avant (1) reposant de manière pivotante sur un élément de support, d'un plateau (3) portant les charges, d'un châssis arrière (2) et d'au moins un train roulant (4) situé en dessous et en avant et/ou en arrière du plateau (3) et formé de roues (4') placées de part et d'autre du train roulant, le châssis avant (1) étant lié au châssis arrière (2) par une connexion télescopique, permettant le déplacement relatif du châssis arrière (2) par rapport au châssis avant (1) dans la direction longitudinale, constituée d'une tige de translation (6) en forme de poutre qui est guidée et, en cas de besoin, bloquée dans un fourreau (5) en forme de tube, une extrémité de ladite tige de translation étant située à l'état rétracté entre et/ou à côté des roues (4') du train roulant (4), **caractérisé en ce que** les roues (4') sont maintenues par une suspension individuelle localisée au niveau du train roulant (4) et **en ce que** la tige de translation est située au-dessus ou en dessous du niveau de l'axe des roues (4').

2. Véhicule selon la revendication 1, **caractérisé en ce que** la connexion télescopique comporte au moins deux tiges de translation à peu près parallèles (6, 7), chacune étant maintenue dans un fourreau (5).

3. Véhicule selon une ou des deux revendications précédentes, **caractérisé en ce que** la tige de translation (6) est située au niveau du train roulant (4) formé par des supports d'essieu et des roues (4').

4. Véhicule selon une ou plusieurs des revendications précédentes, **caractérisé en ce que** le fourreau (5) est constitué d'un tube ininterrompu (5), fixé sur le châssis avant (1) ou sur le châssis arrière (2), **en ce que** le châssis portant ce tube comporte également le train roulant (4) et **en ce qu'**une extrémité du tube est située entre ou à côté des roues (4') du train roulant (4) et est liée au dit châssis.

5. Véhicule selon une ou plusieurs des revendications précédentes, **caractérisé en ce que** le châssis arrière (2) ou le châssis avant (1) possède un train roulant supplémentaire et **en ce qu'**une extrémité de la tige de translation (6) est fixée sur le deuxième châssis tandis que l'autre est située dans un fourreau ancré sur le premier châssis.

6. Véhicule selon une ou plusieurs des revendications précédentes, **caractérisé en ce que** les roues du deuxième train roulant sont liées au deuxième châssis par des suspensions individuelles et **en ce qu'**une extrémité de la tige de translation (6) est située au niveau du deuxième châssis entre les roues (4') et traverse donc le train roulant (4).

7. Véhicule selon une ou plusieurs des revendications précédentes, **caractérisé en ce qu'**au moins un fourreau (5) est situé sur chacun des châssis (1, 2) et **en ce que** la tige de translation (6) coulisse à l'intérieur des deux fourreaux avec une possibilité de blocage et éventuellement de changement.

8. Véhicule selon une ou plusieurs des revendications précédentes, **caractérisé en ce que** les roues (4') du train roulant (4) sont fixées au châssis avant (1) et/ou au châssis arrière (2) de manière à pouvoir être pivotées ou déplacées verticalement contre la force d'un dispositif d'abaissement afin de pouvoir abaisser le plateau (3) portant les charges.

9. Véhicule selon la revendication 8, **caractérisé en ce que** le dispositif d'abaissement est constitué d'éléments de support télescopiques commandés par des moyens électriques, hydrauliques ou pneumatiques, **en ce que** les roues fixées au châssis (1, 2) via un bras pivotant ou via une équerre déplaçable verticalement et **en ce qu'**au moins un élément de support télescopique est placé entre les bras pivotant et le châssis (1, 2) afin de pouvoir modifier l'écartement entre le bras pivotant et la face inférieure du châssis (1, 2).

10. Véhicule selon une ou plusieurs des revendications précédentes, **caractérisé en ce que** les éléments de support télescopiques sont liés par une extrémité au châssis (1, 2) et par l'autre extrémité à un support de l'essieu en forme de V' dont les deux extrémités libres portent chacune un élément suiveur dépassant du support vers le haut et coulissant dans le châssis (1, 2) afin de transférer les forces dans la direction du véhicule.

11. Véhicule selon une ou plusieurs des revendications précédentes, **caractérisé en ce que** le plateau (3) portant les charges consiste en un châssis surbaissé reposant sur le fourreau (5) en forme de tube et étant situé entre le châssis avant (1) et le châssis arrière (2) et lié respectivement à ces châssis.

12. Véhicule selon une ou plusieurs des revendications précédentes, **caractérisé en ce que** le véhicule est une remorque dont l'élément de support avant est un timon, **en ce que** le véhicule est une semi-remorque dont le châssis avant (1) s'appuie via un élément de support sur un tracteur routier ou **en ce que** le véhicule est un poids lourd autonome dont l'élément de support avant est le châssis du tracteur auquel le châssis avant (1) est de préférence soudé.

13. Véhicule selon une ou plusieurs des revendications précédentes, **caractérisé en ce que** les roues sont fixées au châssis avant (1) ou au châssis arrière (2) de manière au moins partiellement pivotante, commandées ou en mouvement libre autour d'un axe vertical (18) et/ou **en ce que** les roues sont pivotables autour d'un axe horizontal (17) et/ou **en ce que** les roues (4') sont des roues individuelles ou des roues jumelées.

14. Véhicule selon la revendication 13, **caractérisé en ce que** les roues peuvent pivoter autour d'un axe (16) supplémentaire.

15. Véhicule selon la revendication 14, **caractérisé en ce que** l'axe de pivotement (16) supplémentaire et l'axe horizontal (17) forment un angle droit.

16. Véhicule selon une ou plusieurs des revendications précédentes, **caractérisé en ce que** la tige de translation (6) est fixée temporairement au châssis (1 ou 2) situé du côté de la tige de translation par au moins une connexion à boulons épousant en particulier la forme de la tige.

17. Véhicule selon la revendication 16, **caractérisé en ce que** les châssis (1 ou 2) possèdent un tube recevant la tige de translation (6) qui coulisse à l'intérieur de ce tube et qui peut être bloquée à l'aide des connexions à boulons.

18. Véhicule selon une ou plusieurs des revendications précédentes, **caractérisé en ce que** le train roulant (4) possède plusieurs écartements possibles entre les roues opposées et/ou **en ce que** la distance entre les roues opposées du train roulant peut être modifiée à l'aide d'une configuration télescopique du châssis (1, 2) et/ou du châssis surbaissé (3) portant les charges.

19. Véhicule selon une ou plusieurs des revendications précédentes, **caractérisé en ce que** la tige de translation (6) traverse le train roulant (4) au moins au niveau du châssis arrière (2).
